# EUROPÄISCHE PATENTSCHRIFT

(11) **EP 1 340 638 B1**
(45) Veröffentlichungstag und Bekanntmachung des Hinweises auf die Patenterteilung: **26.07.2006**
(21) Anmeldenummer: 03002750.2
(22) Anmeldetag: 06.02.2003
(51) Int. Cl.: B60H 1/22, B60H 1/00

(54) **Vorrichtung zum Austausch von Wärme**
Heat exchange device
Dispositif d'échange de chaleur

(30) Priorität: 26.02.2002 DE 10208153
(43) Veröffentlichungstag der Anmeldung: 03.09.2003
(73) Patentinhaber: Behr France Rouffach SAS, 68250 Rouffach (FR)
(72) Erfinder: Brun, Michel, 68740 Rustenhart (FR); Schmittheisler, Christophe, 67680 Epfig (FR); Miss, Pascal, 67600 Selestat (FR); Lucas, Gregory, 68250 Rouffach (FR); Laumonnerie, Yannik, 68250 Rouffach (FR); Mougey, Mathieu, 68190 Ensisheim (FR)
(74) Vertreter: Wallinger, Michael

(56) Entgegenhaltungen:
- DE-A- 4 404 345
- DE-A- 19 933 013
- FR-A- 2 754 492
- US-A- 6 124 570

## Beschreibung

Die vorliegende Erfindung betrifft eine Vorrichtung zum Austausch von Wärme und insbesondere eine elektrische Heizvorrichtung. Derartige Vorrichtungen zum Austausch von Wärme werden beispielsweise zum Beheizen von Luft verwendet.

Die vorliegende Erfindung wird nachfolgend am Beispiel einer elektrischen Heizvorrichtung zum Beheizen des Innenraumes eines Kraftfahrzeuges beschrieben. Es wird jedoch darauf hingewiesen, dass die erfindungsgemäße Vorrichtung auch für andere Anwendungszwecke geeignet ist.

Typischerweise besteht eine elektrische Heizvorrichtung zum Beheizen von Luft für den Einsatz in einem Kraftfahrzeug aus elektrischen Heizelementen und Wärmeleitern, an welchen die zu erwärmende Luft vorbeiströmt. Als elektrische Heizelemente werden beispielsweise keramische Heizelemente mit positiven Temperaturkoeffizienten (PTC-Heizelemente) verwendet.

Die von den Heizelementen abgegebene Wärme wird mittels Wärmeleitern, welche beispielsweise in der Form von Wellrippen oder Lamellen ausgeführt sind und welche in einem zu erwärmenden Luftstrom angeordnet sind, abgeführt.

Es ist bekannt, mehrere solcher Heizelemente und Wärmeleiter zu einem Heizblock zusammenzusetzen. Ein derartiger Heizblock wird üblicherweise in einer Aufnahmeeinrichtung gehalten, an welcher auch Steuereinrichtungen, beispielsweise in Form von Leistungstransistoren oder ähnlichen elektrischen Schalt- bzw. Steuerelementen, angebracht sind. Diese Steuerelemente sind dabei durch elektrische Anschlusseinrichtungen mit einem oder mehreren Heizelementen verbunden.

US-A-6 124 570 offenbart eine gattungsgemäße Vorrichtung zum Austausch von Wärme, insbesondere für ein Kraftfahrzeug, mit wenigstens einer ersten Wärmetauscherbaugruppe, wobei diese erste Wärmetauscherbaugruppe wenigstens eine erste Komponente aufweist, welche mit einer elektrischen Stromquelle verbunden ist und deren Temperatur sich in Abhängigkeit eines die Komponente durchfließenden elektrischen Stromes ändert, und wobei diese erste Wärmetauscherbaugruppe wenigstens eine zweite Komponente zum Austausch von Wärme mit einem die Wärmetauscherbaugruppe umströmenden Medium aufweist, und wenigstens einer zweiten Wärmetauscherbaugruppe, wobei diese zweite Wärmetauscherbaugruppe wenigstens eine erste Komponente aufweist, und wobei diese zweite Wärmetauscherbaugruppe wenigstens eine zweite Komponente zum Austausch von Wärme mit dem die Wärmetauscherbaugruppe umströmenden Medium aufweist, und wobei die Abmessungen der zweiten Wärmetauscherbaugruppe den Abmessungen wenigstens einer dieser ersten Wärmetauscherbaugruppen zumindest teilweise entsprechen, und wobei die Wärmetauscherbaugruppen in einer Aufnahmeeinrichtung angeordnet sind, wobei die erste Komponente der zweiten Wärmetauscherbaugruppe aus einem Material definierter elektrischer und thermischer Leitfähigkeit besteht, und die Temperatur der ersten Komponente der zweiten Wärmetauscherbaugruppe im Wesentlichen nicht durch einen durch die Komponente fließenden elektrischen Strom beeinflusst wird. Genauer gesagt sind die ersten Komponenten der zweiten Wärmetauscherbaugruppe Wasserkanäle, die in einer bestimmten Anzahl an die Aufnahmeeinrichtung befestigt/geschweißt sind.

Es ist die Aufgabe der vorliegenden Erfindung, eine Vorrichtung zum Austausch von Wärme vorzusehen, die so gestaltet ist, dass sie bezüglich der Heizeigenschaften in einfacher Weise dem jeweils vorgegebenen Verwendungszweck angepasst werden kann.

Diese Aufgabe wird durch die Vorrichtung zum Austausch von Wärme mit den Merkmalen des Anspruchs 1 gelöst. Vorteilhafte Weiterbildungen sind in den abhängigen Ansprüchen definiert.

Gemäß Anspruch 1 weist eine erfindungsgemäße Vorrichtung zum Austausch von Wärme wenigstens eine erste Wärmetauscherbaugruppe und wenigstens eine zweite Wärmetauscherbaugruppe auf, die so gestaltet sind, dass die Vorrichtung zum Austausch von Wärme bezüglich der Heizfläche, der Heizleistung und der Heizstufung sowie der Heizleistungsverteilung einfach dem vorgegebenen Verwendungszweck angepasst werden kann.

Bevorzugte Ausführungsformen der erfindungsgemäßen Vorrichtung zum Austausch von Wärme sind Gegenstand der Unteransprüche.

Eine besonders bevorzugte.Ausführungsform einer ersten Wärmetauscherbaugruppe weist demgemäß wenigstens eine erste Komponente auf, die wenigstens eine elektrisches Heizelement beinhaltet. Diese erste Komponente ist mit einer elektrischen Stromquelle verbunden. Das elektrische Heizelement der ersten Komponente ändert dabei in Abhängigkeit des das Heizelement durchfließenden elektrischen Stromes seine Temperatur.

Unter dem Begriff Heizelement im Sinne der vorliegenden Erfindung ist ein Element oder eine Gruppe von Elementen zu verstehen, durch welche elektrische Energie in Wärmeenergie umgewandelt wird. Derartige Heizelemente können beispielsweise keramische Heizelemente mit positiven Temperaturkoeffizienten (PTC-Heizelemente) sein. Im Rahmen der Erfindung können jedoch auch andere Heizelemente, wie zum Beispiel Widerstands-Heizelemente, Plasma-Heizelemente oder dergleichen Verwendung finden.

Des weiteren weist die erste Wärmetauscherbaugruppe wenigstens eine zweite Komponente auf, die beispielsweise Wellrippenförmig oder Lamellenförmig ausgeführt ist und aus thermisch leitendem Material besteht. Diese zweite Komponente dient dabei dem Austausch von Wärme mit einem die Wärmetauscherbaugruppe umströmendem Medium.

Das die erste Wärmetauscherbaugruppe umströmende Medium ist vorzugsweise ein gasförmiges Medium oder ein flüssiges Medium. Besonders bevorzugt ist das die erste Wärmetauscherbaugruppe umströmende Medium Luft, welche in einem Kraftfahrzeug in dessen Fahrzeuginnenraum gefördert wird, um diesen zu temperieren.

Die Vorrichtung zum Austausch von Wärme weist außerdem wenigstens eine zweite Wärmetauscherbaugruppe auf. Ähnlich wie die erste Wärmetauscherbaugruppe weist die zweite Wärmetauscherbaugruppe wenigstens eine zweite Komponente auf, die beispielsweise Wellrippenförmig oder Lamellenförmig ausgeführt ist und aus thermisch leitendem Material besteht. Die zweite Komponente der zweiten Wärmetauscherbaugruppe dient dabei ebenfalls dem Austausch von Wärme mit dem die Wärmetauscherbaugruppe umströmendem Medium.

Das die zweite Wärmetauscherbaugruppe umströmende Medium ist vorzugsweise ein gasförmiges Medium oder ein flüssiges Medium. Besonders bevorzugt ist das die zweite Wärmetauscherbaugruppe umströmende Medium Luft, welche in einem Kraftfahrzeug in dessen Fahrzeuginnenraum gefördert wird, um diesen zu temperieren.

Die erfindungsgemäße Vorrichtung zum Austauschvon Wärme ist ferner dadurch gekennzeichnet, dass die zweite Wärmetauscherbaugruppe eine erste Komponente aufweist, welche im Gegensatz zur ersten Komponente der ersten Wärmetauscherbaugruppe aus einem Material definierter elektrischer und thermischer Leitfähigkeit besteht. Die Temperatur der ersten Komponente der zweiten Wärmetauscherbaugruppe ist hierbei im wesentlichen unabhängig von einem durch diese Komponente fließenden elektrischen Strom.

Die Abmessungen der zweiten Wärmetauscherbaugruppe entsprechen zumindest teilweise den Abmessungen der ersten Wärmetauscherbaugruppe. In einer weiteren Ausführungsform der vorliegenden Erfindung entsprechen die Abmessungen der zweiten Wärmetauscherbaugruppe zumindest teilweise den Abmessungen mehrerer aneinander anliegender erster Wärmetauscherbaugruppen.

Zur Herstellung einer erfindungsgemäßen Vorrichtung zum Austausch von Wärme werden erste und/oder zweite Wärmetauscherbaugruppen in einer Aufnahmeeinrichtung in beliebiger Stückzahl und Reihenfolge angeordnet.

Erfindungsgemäß ist die Vorrichtung zum Austausch von Wärme dadurch gekennzeichnet, dass die Wärmetauscherbaugruppen so kombiniert werden, dass eine vorgegebene Wärmemenge, zwischen der gesamten Vorrichtung zum Austausch von Wärme und dem die Wärmetauscherbaugruppen umströmenden Medium austauschbar ist.

Die Kombination von ersten Wärmetauscherbaugruppen mit zweiten Wärmetauscherbaugruppen ermöglicht die Vorgabe der maximal abzugebende Wärmemenge der gesamten Vorrichtung an das die Wärmetauscherkomponenten umströmende Medium.

Gemäß einer bevorzugten Ausführungsform sind die ersten Komponenten der ersten Wärmetauscherbaugruppe so angeordnet, dass sie einen vorgegebenen Abstand voneinander und von den äußeren Begrenzungen der Wärmetauscherbaugruppe aufweisen.

In einer bevorzugten Weiterbildung sind die ersten Komponenten einer ersten Wärmetauscherbaugruppe so angeordnet, dass sie bei Verwendung mehrerer Wärmetauscherbaugruppen mit einem Heizelement nicht den gleichen Abstand aufweisen, sondern mit Versatz zur ersten Komponente zumindest einer weiteren Wärmetauscherbaugruppe angeordnet sind, um eine bessere Wärmeverteilung über den gesamten Heizblock zu erreichen.

Gemäß einer bevorzugten Weiterbildung der vorliegenden Erfindung sind die ersten Komponenten der zweiten Wärmetauscherbaugruppe standardisierte Funktionselemente, deren physikalische Eigenschaften in der Art vordefiniert sind, dass diese sowohl elektrischen Strom und thermische Energie leiten, elektrischen Strom und thermische Energie isolieren, elektrischen Strom leiten und thermische Energie isolieren oder elektrischen Strom isolieren und thermische Energie leiten.

In einer weiteren Ausführungsform der vorliegenden Erfindung ist die Vorrichtung zum Austausch von Wärme dadurch gekennzeichnet, dass die Wärmetauscherbaugruppen so kombiniert werden, dass die Wärmemenge, welche zwischen einem Teilbereich der Vorrichtung zum, Austausch von Wärme und dem die Wärmetauscherbaugruppen umströmenden Medium, unabhängig von der Wärmemenge, welche zwischen einem anderen Teilbereich der Vorrichtung zum, Austausch von Wärme und dem die Wärmetauscherbaugruppen umströmenden Medium austauschbar ist, definierbar ist.

Vorzugsweise sind die zweiten Komponenten der ersten Wärmetauscherbaügruppe und/oder die zweiten Komponenten der zweiten Wärmetauscherbaugruppe Kühlrippen, welche die von den elektrischen Heizelementen, vorzugsweise den PTC-Heizelementen abgegebene Wärme abführen und mit dem sie umströmenden Medium, beispielsweise Luft, austauschen. Vorzugsweise sind diese Kühlrippen wellenförmige Kühlrippen oder Wellrippen, die aus einem elektrisch und/oder thermisch leitenden Material, wie zum Beispiel Aluminium oder einem ähnlichen Material, hergestellt werden.

Um eine verbesserte Wärmeübertragung zwischen der ersten Komponente und der zweiten Komponente der ersten Wärmetauscherbaugruppe und/oder zwischen der ersten Komponente und der zweiten Komponente der zweiten Wärmetäuscherbaugruppe zu ermöglichen, ist bei einer bevorzugte Weiterbildung der erfindungsgemäßen Vorrichtung zum Austausch von Wärme wenigstens eine dritte Komponente vorgesehen, welche thermische und/oder elektrische Energie leitet. Vorzugsweise ist diese dritte Komponente zwischen der ersten und der zweiten Komponente angeordnet.

In einer bevorzugten Ausführungsform ist diese dritte Komponente ein Kontaktblech, beispielsweise aus Aluminium, welches zwischen dem PTC-Heizelement oder den PTC-Heizelementen und den Wellrippen angeordnet ist.

In einer bevorzugten Weiterbildung der vorliegenden Erfindung sind die Komponenten der Wärmetauscherbaugruppen so angeordnet, dass sie sich in der Art berühren, dass der Transport von elektrischer und/oder thermischer Energie begünstigt wird.

Wie bei der Anordnung der einzelnen Komponenten der Wärmetauscherbaugruppen ist für die Vorrichtung zum Austausch von Wärme auch vorgesehen, dass sich wenigstens zwei Wärmetauscherbaugruppen entsprechend der zuvor beschriebenen Art und Weise berühren, so dass der Transport bzw. der Austausch von elektrischer und/oder thermischer Energie zwischen den Wärmetauscherbaugruppen begünstigt wird.

Die physikalischen Eigenschaften der ersten Komponente der zweiten Wärmetauscherbaugruppe sind bei einer bevorzugten Ausführungsform der erfindungsgemäßen Vorrichtung insbesondere so definiert, dass ein Transport von thermischer und/oder elektrischer Energie begünstigt wird.

Bei einer weiteren bevorzugten Ausführungsform der erfindungsgemäßen Vorrichtung sind die physikalischen Eigenschaften der ersten Komponente der zweiten Wärmetauscherbaugruppe so definiert, dass ein Transport von thermischer und/oder elektrischer Energie gehemmt wird.

Die erste Komponente der zweiten Wärmetauscherbaugruppe besteht demgemäß aus einem Material, welches die zuvor beschriebenen physikalischen Eigenschaften aufweist und welches aus diesem Grund den Transport von thermischer und/oder elektrischer Energie begünstigt oder hemmt.

Solch ein Material kann zum Beispiel ein Material sein, welches elektrizitätsleitend und wärmeleitend ist oder welches im wesentlichen elektrizitätsisolierend und wärmeisolierend ist oder welches elektrizitätsleitend und im wesentlichen wärmeisolierend ist oder im wesentlichen elektrizitätsisolierend und wärmeleitend ist. Sowohl die wärmeisolierende Wirkung als auch die elektrizitätsisolierende Wirkung kann hierbei unterschiedlich stark ausgeprägt sein. Es besteht außerdem die Möglichkeit ein Material mit veränderlichen Elektrizitäts- und Wärmeleitungseigenschaften zu verwenden, wobei diese Eigenschaften durch eine Einwirkung auf das Material beeinflusst werden können.

Die Leitung eines elektrischen Stromes kann hierbei beispielsweise durch den Transport freier Ladungsträger innerhalb des Materials, aus welchem die erste Komponente der zweiten Wärmetauscherbaugruppe aufgebaut ist, erfolgen.

Eine bevorzugte Weiterbildung der vorliegenden Erfindung ist dadurch gekennzeichnet, dass die Form und Abmessung der ersten Komponente der zweiten Wärmetauscherbaugruppe (standardisiertes Funktionselement) so gewählt ist, dass der Strömungswiderstand welchen die erste Komponente der zweiten Wärmetauscherbaugruppe dem sie umströmenden Medium entgegensetzt in einem vorbestimmten Verhältnis zu dem Strömungswiderstand steht, den die erste Komponente der ersten Wärmetauscherbaugruppe dem sie umströmenden Medium entgegensetzt.

In einer Weiterbildung der erfindungsgemäßen Vorrichtung ist das die Form und Abmessung der ersten Komponente der zweiten Wärmetauscherbaugruppe so ausgeführt, dass sie dem die Wärmetauscherbaugruppe einen beliebig definierbaren Strömungswiderstand entgegensetzt.

Durch eine Veränderung der Abmessungen und der Form der ersten Komponente der zweiten Wärmetauscherbaugrüppe kann der Strömungswiderstand der gesamten Vorrichtung zum Austausch von Wärme an die für die Wärmeübertragung erforderlichen Bedingungen angepasst werden.

In einer bevorzugten Ausführungsform der Vorrichtung zum Austausch von Wärme weist diese eine Aufnahmeeinrichtung auf, welche insbesondere wenigstens einen ersten und zweiten seitlichen Rahmenschenkel aufweist. Innerhalb dieser Aufnahmeeinrichtung, vorzugsweise zwischen dem ersten und zweiten Rahmenschenkel ist wenigstens ein Heizblock angeordnet, der aus einer oder mehreren Wärmetauscherbaugruppen aufgebaut ist.

Der erste und der zweite Rahmenschenkel sind dabei vorzugsweise parallel zur Längsachse der Wärmetauscherbaugruppen orientiert, wobei die Wärmetauscherbaugruppen durch eine im wesentlichen orthogonal zur Längsachse der Wärmetauscherbaugruppen wirkenden Kraft zwischen dem ersten und zweiten Rahmenschenkel gehalten werden.

In einer weiteren Ausführungsform weist die Aufnahmeeinrichtung obere und/oder untere Rahmenschenkel auf, welche an den oberen und/oder unteren längsseitigen Enden der Wärmetauscherbaugruppen angeordnet sind. Vorzugsweise sind die Wärmetauscherbaugruppen im wesentlichen innerhalb der von den Rahmenschenkeln aufgespannten Fläche angeordnet.

Als Rahmenschenkel im Sinne der vorliegenden Erfindung ist ein Element oder eine Gruppe von Elementen zu verstehen, welches einen äußeren Abschluss eines zwischen mehreren Rahmenschenkeln aufgenommenen oder angeordneten Elements bildet und welches sich im wesentlichen in der Ebene der Wärmetauscherbaugruppen erstreckt.

In einer weiteren Ausführungsform ist die Vorrichtung zum Austausch von Wärme dadurch gekennzeichnet, dass die seitlichen Rahmenschenkel durch einen oberen und/oder unteren Rahmenschenkel verbunden sind, so dass sie in einem vorgegebenen Abstand zueinander gehalten werden.

In einer weiteren Ausführungsform sind die oberen und/oder unteren Rahmenschenkel als Endkappen ausgebildet.

Als Endkappe im Sinne der vorliegenden Erfindung ist ein Element oder eine Gruppe von Elementen zu verstehen, welches einen vorbestimmten Abschluss der Wärmetauscherbaugruppe oder des Heizblocks wenigstens in eine Erstreckungsrichtung bildet. Im Sinne der Erfindung ist eine Endkappe bevorzugt so gestaltet, dass der Heizblock in die Endkappe eingreift, vorzugsweise zumindest teilweise formschlüssig eingreift, bzw. dass die Endkappe den Heizblock oder Teile davon umgreift.

Vorzugsweise bestehen die Rahmenschenkel aus einem elektrischen, nicht leitenden Material, vorzugsweise Kunststoff, wie zum Beispiel PVC (Polyvinylchlorid), PE (Pblyethylen), PP (Polypropylen), Silikone und Silikonderivate, TPE (Thermoplastische Elastomere), Epoxydharze, Duroplaste, Teflon oder dergleichen. In einer weiteren bevorzugten Ausführungsform bestehen die Rahmenschenkel aus einer Kombination eines elektrisch leitenden Materials, wie zum Beispiel einem Metall und einem Kunststoff. Als Metall findet dabei vorzugsweise Aluminium und Aluminiumlegierungen, Titan und Titanlegierungen, Eisen und Eisenlegierungen, Zink und Zinklegierungen oder dergleichen Verwendung.

Die Rahmenschenkel der Aufnahmeeinrichtung weisen in einer besonder bevorzugten Ausführungsform der erfindungsgemäßen. Vorrichtung einen hohlprofilförmigen oder formprofilförmigen Querschnitt auf, vorzugsweise einen U-förmigen, einen I-förmigen, einen L-förmigen, einen T-förmigen, einen V-förmigen Querschnitt oder dergleichen auf.

Die Vorrichtung zum Austausch von Wärme ist in einer weiteren Ausführungsform dadurch gekennzeichnet, dass wenigstens eine der Wärmetauscherbaugruppen mit wenigstens einem Rahmenschenkel' verbunden ist. Vorzugsweise wird diese Verbindung durch eine Steckverbindung, eine Schraubverbindüng, eine Klebeverbindung, eine Schweißverbindung und/oder dergleichen fixiert.

Die Aufnahmeeinrichtung für die Vorrichtung zum Austausch von Wärme ist in einer bevorzugten Ausführungsform weiterhin dadurch gekennzeichnet, dass sie ein Element aufweist, das wenigstens zwischen zwei Komponenten einer Wärmetauscherbaugruppe eingreift und somit einer Delokalisierung der Wärmetauscherbaugruppen oder der Komponenten der Wärmetauscherbaugruppen entgegenwirkt. Dieses Element kann beispielsweise ein definierter Abstandshalter sein, der zwischen zwei Wärmetauscherbäugruppen oder zwischen zwei Komponenten angeordnet ist und aus einem nicht leitenden Material besteht, so dass eine elektrisch leitende Verbindung zwischen den beiden Wärmetauscherbaugruppen oder den Komponenten verhindert wird.

In einer weiteren Ausführungsform ist die Vorrichtung zum Austausch von Wärme dadurch gekennzeichnet, dass die Aufnahmeeinrichtung eine Ausnehmung oder Durchführung aufweist, in welche wenigstens eine Komponente, insbesondere das Kontaktblech der ersten und/oder zweiten Wärmetauscherbaugruppe, eingreift.

Wenigstens eine Komponente der Aufnahmeeinrichtung einer Vorrichtung zum Austauschen von Wärme ist in einer weiteren Ausführungsform mit einem Gehäuseteil einer Klimaanlage verbindbar.

In einer Weiterbildung der erfindungsgemäßen Vorrichtung kann eine Komponente der Aufnahmeeinrichtung mit dem Gehäuseteil einer Klimaanlage einstückig ausgebildet oder in dem Gehäuseteil integriert sein.

Überdies kann wenigstens eine Komponente der Aufnahmeeinrichtung einen elektrischen Anschluss aufweisen um die Aufnahmeeinrichtung, welche ihrerseits mit den Wärmetauscherbaugruppen in elektrisch leitendem Kontakt stehen kann mit den Kontakten einer elektrischen Stromversorgung zu verbinden.

Ist die elektrische Leitfähigkeit der ersten Komponente der zweiten Wärmetauscherbaugruppe (standardisiertes Funktionselement) so gewählt, dass ein elektrischer Strom durch die Komponente fließen kann, so lassen sich dadurch mehrere elektrische Heizelemente mit Strom versorgen. Durch eine Kombination elektrisch leitender und elektrisch nichtleitender standardisierter Funktionselemente ist eine Spannungsversorgung der elektrischen Heizelemente in einer beliebig definierbaren elektrischen Schaltungsanordnung möglich.

In einer bevorzugten Ausführungsform wird die Vorrichtung zum Austausch von Wärme in einer Klimaanlage eines Kraftfahrzeuges eingesetzt um eine Erwärmung der Innenraumluft des Kraftfahrzeuges zu ermöglichen. Hierbei wird durch die erfindungsgemäße Vorrichtung Luft, die in den Innenraum des Fahrzeuges eingeleitet wird, beheizt. Die Klimaanlage weist überdies vorzugsweise einen Kompressor, Kondensator, Trockner/Sammler, Expansionsventil und einen Verdampfer auf.

In einer bevorzugten Ausführungsform kann die Vorrichtung vorzugsweise in den Strömungskanal des Lüftungssystems eine Klimaanlage eingebracht werden, wobei sich neben einem einflutigen Strömungskanal insbesondere auch mehrflutige Strömungskanäle für den Einsatz in der Vorrichtung eignen. Hierbei können in einer Weiterbildung der erfindungsgemäßen Vorrichtung die unteschiedlichen Luftströme des mehrflutigen Strömungskanals auf unterschiedliche und unabhängige Art und Weise beheizt werden.

Eine erfindungsgemäße Vorrichtung zum Austausch von Wärme, kann zum Beheizen von in den Innenraum eines Kraftfahrzeuges geleitete Luft verwendet werden. Die Vorrichtung kann hierbei zusätzlich zu den üblicherweise verwendeten Wärmetauschern in einem Kraftfahrzeug verwendet werden und ist dabei vorzugsweise solange in Betrieb, bis die vom Heiz- und Kühlkreislauf eines Kraftfahrzeuges zur Verfügung stehende Wärme des Verbrennungsmotors ausreicht, um eine ausreichende Erwärmung der in den Fahrzeuginnenraum geführten Luft zu erreichen.

Ein weiteren Ausführungsform findet die erfindungsgemäße Vorrichtung Verwendung in Kraftfahrzeugen mit niedrigem Kraftstoffverbrauch, deren Verbrennungswärme des Motors so niedrig ist, dass nicht genügend Wärmeenergie zum ausreichenden Erwärmen des Innenraums vorhanden ist.

Es besteht überdies die Möglichkeit, die erfindungsgemäße Vorrichtung in einer beliebigen Heiz- bzw. Kühleinrichtung allein oder zusätzlich zu anderen Einrichtungen zum Austausch von Wärme zu verwenden.

Die Erfindung wird nachfolgend in Ausführungsbeispielen und anhand der zugehörigen Zeichnungen näher erläutert.

Es zeigen:
- Fig. 1: eine schematische Darstellung einer Vorrichtung zum Austausch von Wärme gemäß dem Stand der Technik;
- Fig. 2: eine schematische Darstellung einer Vorrichtung zum Austausch von Wärme gemäß der vorliegenden Erfindung;
- Fig. 3: eine schematische Darstellung einer ersten Wärmetauscherbaugruppe mit einem elektrischen Heizelement;
- Fig. 4: eine schematische Darstellung einer zweiten Wärmetauscherbaugruppe mit einem standardisierten Funktionselement;
- Fig. 5: eine schematische Darstellung verschiedener Gestaltungsformen von standardisierten Funktionselementen;
- Fig. 6: eine schematische Darstellung einer zweiten Wärmetauscherbaugruppe mit Strömungskanälen.

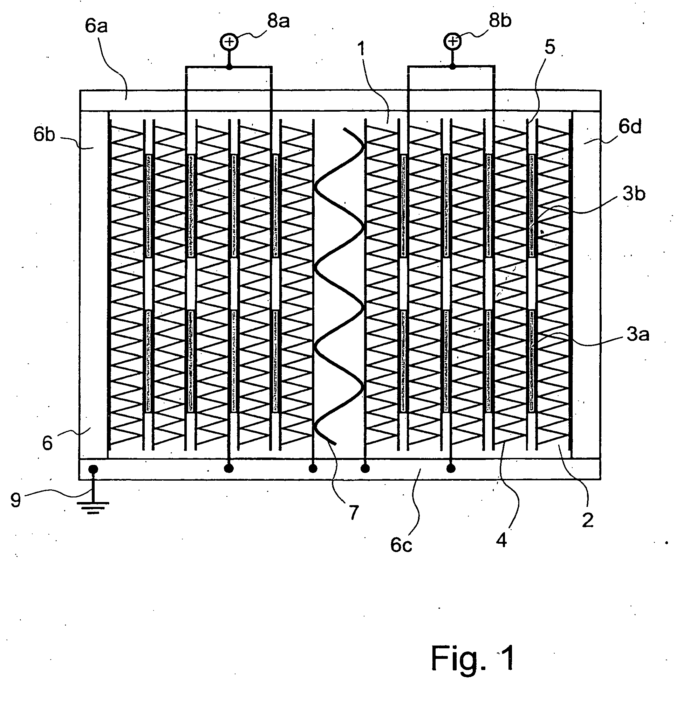

In Fig. 1 ist eine Vorrichtung zum Austausch von Wärme gemäß dem Stand der Technik dargestellt. Diese weist einen Heizblock 1 auf, der aus mehreren nebeneinander angeordneten Wärmetauscherbaugruppen 2 besteht. Die Wärmetauscherbaugruppe 2 weist als erste Komponente zumindest eine elektrische Wärmequelle in der Form eines streifenförmigen PTC-Heizelementes 3a, 3b auf, welches zwischen zwei Wellrippen 4 angeordnet ist.

Um einen besseren Wärmeübergang zwischen den PTC-Heizelementen 3a, 3b und der Wellrippe 4 zu erreichen, weist eine solche Wärmetauscherbaugruppe Kontaktbleche 5 auf, die zwischen dem PTC-Heizelement 3a, 3b und der Wellrippe 4 angeordnet sind und welche mit dem PTC-Heizelement und der Wellrippe elektrisch und thermisch leitend verbunden sind.

Der rechteckförmige Heizblock 1 ist in einem rechteckförmigen Rahmen 6 mit vier Rahmenschenkeln 6a, 6b, 6c, 6d angeordnet und wird mit einer Feder 7 in diesem Rahmen verspannt.

Die PTC-Heizelemente sind mit einer Spannungsquelle 8 verbunden, wobei der Stromkreis über ein Kontaktblech 5, eine Wellrippe 4 und einem Rahmenelement 6c geschlossen wird. In diesem Ausführungsbeispiel sind zwei Wärmetauscherbaugruppen 2 elektrisch parallel geschaltet.

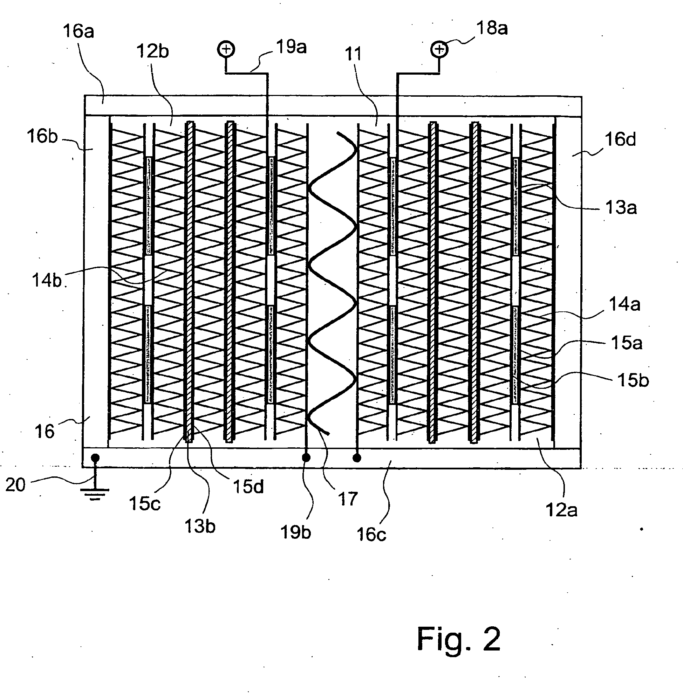

Fig. 2 stellt eine bevorzugte Ausführungsform gemäß der vorliegenden Erfindung dar. Der rechteckförmige Heizblock 11 ist in einem rechteckförmigen Rahmen 16 mit vier Rahmenschenkeln 16a, 16b, 16c, 16d gehalten. In einer bevorzugten Ausführungsform entspricht der Querschnitt der Rahmenschenkel im wesentlichen einer U-förmigen Gestalt.

In der Ausführungsform gemäß Fig. 2 ist eine erste Wärmetauscherbaugruppe 12a dargestellt, welche PTC-Heizelemente 13a, Kontaktbleche 15a, 15b und eine Wellrippe 14a aufweist. Mittels des elektrischen Kontaktes 19a sind die PTC-Heizelemente 13a mit einer Stromquelle 18a verbunden.

Neben der ersten Wärmetauscherbaugruppe 12a weist der Heizblock 11 außerdem eine zweite Wärmetauscherbaugruppe 12b auf. Sie weist neben den Kontaktblechen 15c, 15d sowie der Wellrippe 14b eine erste Komponente 13b auf, die im Gegensatz zu der ersten Komponente der ersten Wärmetauscherbaugruppe 12a kein Heizelement aufweist.

Diese erste Komponente 13b der zweiten Wärmetauscherbaugruppe wird im wesentlichen nicht durch einen durch die Komponente fließenden elektrischen Strom beeinflusst und stellt keine elektrische Wärmequelle dar sondern ein standardisiertes Funktionselement, um einen vorbestimmten Abstand zwischen den Kontaktblechen 15c, 15d zu halten und einen definierten Übergang von Energie zwischen den Kontaktblechen 15 c, 15d zu gewährleisten.

Durch die Auswahl geeigneter Materialien wird dieser ersten Komponente der zweiten Wärmetauscherbaugruppe 13b eine definierte elektrische und thermische Leitfähigkeit zugeordnet.

Gemäß der bevorzugten Ausführungsform aus Fig. 2 wird nicht nur durch die unmittelbar mit den PTC-Heizelementen 13a verbundenen Wellrippen 14a Energie an die die Vorrichtung durchströmende Luft abgeführt, sondern auch durch die zwischen den standardisierten Funktionselementen 13b angeordneten Wellrippen.

Gemäß der hier dargestellten Ausführungsform werden die Wärmetauscherbaugruppen mittels einer Feder 17 in dem Rahmen 16 verspannt, um beispielsweise Fertigungstoleranzen auszugleichen und die Wärmetauscherbaugruppen im Rahmen im wesentlichen zu fixieren.

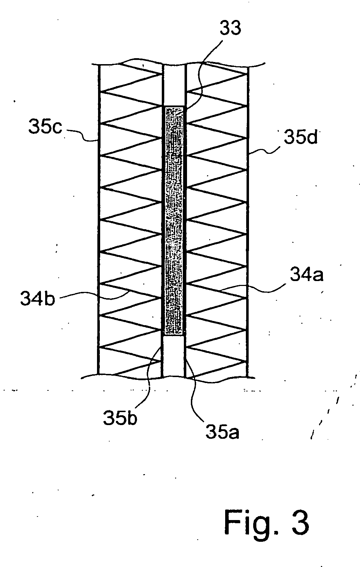

Fig. 3 zeigt eine schematisierte Detaildarstellung einer ersten Wärmetauscherbaugruppe mit PTC-Heizelement. Das PTC-Heizelement 33 ist zwischen zwei Kontaktblechen 35a, 35b angeordnet. An diese Kontaktbleche schließen sich die Wellrippen 34a, 34b an und werden durch zwei weitere Kontaktbleche 35c, 35d abgeschlossen.

Innerhalb dieser Wärmetauscherbaugruppe sind die einzelnen Komponenten so angeordnet, dass sie sich in der Art berühren, dass ein Austausch von thermischer und/oder elektrischer Energie begünstigt wird.

Die Verbindung zwischen den einzelnen Komponenten kann gemäß der vorliegenden Erfindung durch Kleben, Schweißen, Löten oder entsprechende Bauteilverbindungen erzielt werden.

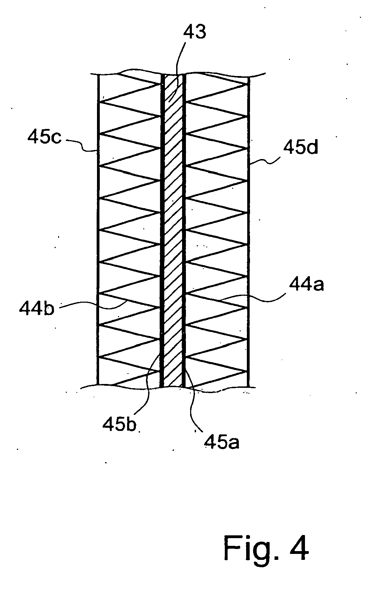

In Fig. 4 ist eine Wärmetauscherbaugruppe ohne PTC-Heizelement gemäß der vorliegenden Erfindung dargestellt . An den zwei Seiten des standardisierten Funktionselementes 43 schließen sich zwei Kontaktbleche 45a, 45b an und sind so mit dem standardisierten Funktionselement verbunden, dass ein Austausch bzw. Transport von Wärme oder elektrischer Energie zwischen den Kontaktblechen 45a, 45b möglich ist.

Im Anschluss an die Kontaktbleche weist die Wärmetauscherbaugruppen Wellrippen 44a, 44b auf, die ebenfalls in elektrisch und/oder thermisch leitendem Kontakt mit den Kontaktblechen 45a und 45b stehen. An die Wellrippen 44a, 44b schließen sich die Kontaktbleche 45c, 45d in der zuvor genannten Art an.

Diese Ausführungsform einer Wärmetauscherbaugruppe mit standardisiertem Funktionselement stellt eine mögliche Variante einer Vielzahl verschieden konfigurierbarer Wärmetauscherbaugruppen dar, da sowohl die Zahl an Kontaktblechen als auch an Wellrippen beliebig variiert werden kann.

Durch den Einsatz dieser zweiten Wärmetauscherbaugruppe in einer Vorrichtung zum Austausch von Wärme lässt sich ein Heizblock gemäß der Erfindung einem vorbestimmten Leistungsbereich anpassen, ohne jedoch die Grundkonfiguration im Sinne der äußeren Abmessungen im wesentlichen verändern zu müssen. Somit kann nach Festlegung dieser äußeren Abmessungen ein sehr großer Leistungsbereich der erfindungsgemäßen Vorrichtung zum Austausch von Wärme erreicht werden.

Die nahezu beliebige Kombination der in Fig. 3 bzw. Fig. 4 dargestellten Wärmetauscherbaugruppen stellt somit ein System, insbesondere ein Baukastensystem, zur Verfügung, das eine optimale Anpassung der Heizfläche, Heizleistung, Heizleistungsverteilung und Heizstufung gemäß einer entsprechenden Vorgabe erfüllen kann.

Diese Vorgaben ergeben sich im wesentlichen aus den für den Einsatz bestimmten Fahrzeugen und deren jeweiliger Wärmeleistung, die zum Aufheizen einer in den Raum geführten Luft zur Verfügung steht.

Auch der modulare Aufbau, das heißt die Verwendung von Wärmetauscherbaugruppen mit standardisierten Funktionselementen und Wärmetauscherbaugruppen mit PTC-Heizelementen, ergibt eine besonders hohe Flexibilität des verwendeten Systems. So ermöglich zum Beispiel die definierte Anordnung der Wärmequellen bzw. der standardisierten Funktionselemente in verschiedene Zonen die getrennte Regelung der Ausblastemperatur des durchströmenden Mediums, wie beispielsweise der Luft, welche in den Innenraum eines Kraftfahrzeugs geleitet wird.

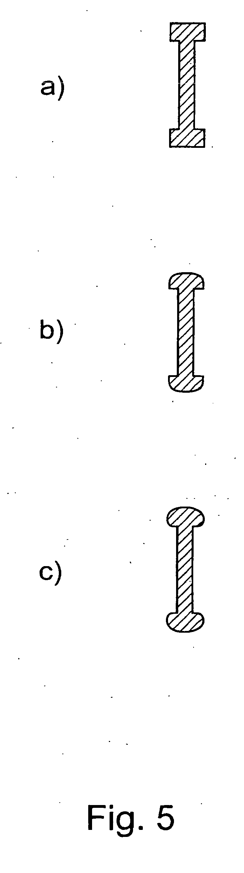

Fig. 5 stellt eine Schnittdarstellung von bevorzugten Ausführungsformen der ersten Komponente der zweiten Wärmetauscherbaugruppe (standardisiertes Funktionselement) dar. Durch die unterschiedliche Ausgestaltung kann insbesondere der Strömungswiderstand der standardisierten Funktionselemente bezüglich des die erfindungsgemäße Vorrichtung durchströmenden Mediums an die jeweiligen Erfordernisse in einer Klimaanlage angepasst werden.

So kann mit dem in Fig. 5a dargestellten standardisierten Funktionselement der Strömungswiderstand im Vergleich zu einer ersten Komponente der ersten Wärmetauscherbaugruppe erhöht und mit dem in Fig. 5c dargestellten standardisierten Funktionselementen der Strömungswiderstand im Vergleich dazu reduziert werden.

Mit dem in Fig. 5b dargestellten standardisierten Funktionselementen wird ein nahezu identischer Strömungswiderstand im Vergleich zu einer ersten Komponente der ersten Wärmetauscherbaugruppe mit einem PTC-Heizelement erreicht.

Es sei darauf hingewiesen, dass die in Fig. 5 dargestellten Beispiele einer möglichen Gestaltung der standardisierten Funktionselement nur exemplarisch sind und die Weiterentwicklung der äußeren Abmessung bezüglich einer aerodynamischen Änderung in Hinblick auf die vorgegebenen Anforderungen, im Sinn der vorliegenden Erfindung ist.

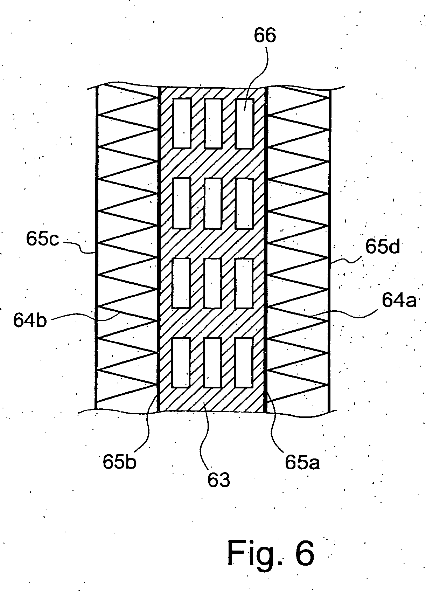

Gemäß einem weiteren Ausführungsbeispiel, wie in Fig. 6 dargestellt, kann das standardisierten Funktionselement auch so gestaltet werden, dass dieses eine komplette Wärmetauscherbaugruppe innerhalb eines Heizblockes ersetzen kann. Gemäß dieser Ausführungsform wird die Breite der ersten Komponente einer zweiten Wärmetauscherbaugruppe so gewählt, dass die Breite im wesentlichen ein ganzzahliges vielfaches der Breite einer einzelnen Wärmetauscherbaugruppe ist.

Zusätzlich weist das standardisierte Funktionselement aerodynamische Strömungswege auf, um einen übermäßigen Druckabfall des durchströmenden Mediums durch den Heizblock zu verhindern und eine verbesserte Wärmeübertragung an das durchströmende Medium zu gewährleisten.

Wie in Fig. 6 dargestellt, weist eine solche Wärmetauscherbaugruppe wenigstens ein standardisiertes Funktionselemente 63 mit aerodynamischen Strömungswegen 66 auf sowie Kontaktbleche 65a, 65b, 65c, 65d, und Wellrippen 64a, 64b.

Die Strömungswege 66 sind so gestaltet, dass eine vorbestimmter Druckabfall des durchströmenden Mediums erreicht wird. So können die Strömungswege jede gewünschte geometrische Form aufweisen, wobei die aerodynamischen Anforderungen der Vorrichtung bei der ausgestaltung der Strömungswege berücksichtigt werden. Auch die Anzahl und Anordnung der Strömungswege in einem standardisierten Funktionselement kann grundsätzlich frei gewählt werden und insbesondere den aerodynamischen Anforderungen für den gesamten Strömungswiderstand der Wärmetauscherbaugruppen und des Heizblocks angepasst werden.

## Patentansprüche

1. Vorrichtung zum Austausch von Wärme, insbesondere für ein Kraftfahrzeug mit
wenigstens einer ersten Wärmetauscherbaugruppe (12a),
wobei diese erste Wärmetauscherbaugruppe (12a) wenigstens eine erste Komponente (13a) aufweist, welche mit einer elektrischen Stromquelle (18a) verbunden ist (19a) und deren Temperatur sich in Abhängigkeit eines die Komponente durchfließenden elektrischen Stromes ändert, und
wobei diese erste Wärmetauscherbaugruppe (12a) wenigstens eine zweite Komponente (14a) zum Austausch von Wärme mit einem die Wärmetauscherbaugruppe umströmenden Medium aufweist, und
wenigstens einer zweiten Wärmetauscherbaugruppe (12b),
wobei diese zweite Wärmetauscherbaugruppe (12b) wenigstens eine erste Komponente (13b) aufweist, und
wobei diese zweite Wärmetauscherbaugruppe (12b) wenigstens eine zweite Komponente (14b) zum Austausch von Wärme mit dem die Wärmetauscherbaugruppe umströmenden Medium aufweist, und
wobei die Abmessungen der zweiten Wärmetauscherbaugruppe (12b) den Abmessungen wenigstens einer dieser ersten Wärmetauscherbaugruppen zumindest teilweise entsprechen, und
wobei die Wärmetauscherbaugruppen (12a, 12b) in einer Aufnahmeeinrichtung (16) angeordnet sind, wobei
die erste Komponente (13b) der zweiten Wärmetauscherbaugruppe (12b) aus einem Material definierter elektrischer und thermischer Leitfähigkeit besteht, und
die Temperatur der ersten Komponente (13b) der zweiten Wärmetauscherbaugruppe (12b) im Wesentlichen nicht durch einen durch die Komponente fließenden elektrischen Strom beeinflusst wird,
**dadurch gekennzeichnet, dass**
die erste und die zweite Wärmetauscherbaugruppen (12a, 12b) in der Aufnahmeeinrichtung (16) in unterschiedlichen Konfigurationen modular kombinierbar sind.

2. Vorrichtung zum Austausch von Wärme gemäß Anspruch 1,
**dadurch gekennzeichnet, dass**
die Wärmetauscherbaugruppen (12a, 12b) so kombiniert sind, dass die Wärmemenge, welche zwischen der gesamte Vorrichtung und dem die Wärmetauscherbaugruppen umströmenden Medium austauschbar ist, vorgegeben ist.

3. Vorrichtung zum Austausch von Wärme gemäß wenigstens einem der vorstehenden Ansprüche,
**dadurch gekennzeichnet, dass**
die erste Komponente (13a) der ersten Wärmetauscherbaugruppe (12a) wenigstens ein Heizelement mit einem positiven Temperaturkoeffizienten (PTC- Heizelement) aufweist.

4. Vorrichtung zum Austausch von Wärme gemäß wenigstens einem der vorstehenden Ansprüche,
**dadurch gekennzeichnet, dass**
die zweite Komponente (14a) der ersten Wärmetauscherbaugruppe (12a) und/oder die zweite Komponente (14b) der zweiten Wärmetauscherbaugruppe (12b) Kühlrippen, vorzugsweise wellenförmige Kühlrippen, vorzugsweise Wellrippen aus einem elektrisch und/oder thermisch leitenden Material aufweist.

5. Vorrichtung zum Austausch von Wärme gemäß wenigstens einem der vorstehenden Ansprüche,
**dadurch gekennzeichnet, dass**
die erste Wärmetauscherbaugruppe (12a) und/oder die zweite Wärmetauscherbaugruppe (12b) wenigstens eine dritte Komponente (15a, 15c) aufweist, welche thermische und/oder elektrische Energie leitet.

6. Vorrichtung zum Austausch von Wärme gemäß wenigstens einem der vorstehenden Ansprüche,
**dadurch gekennzeichnet, dass**
die dritte Komponente (15a) der ersten Wärmetauscherbaugruppe (12a) zwischen der ersten (13a) und der zweiten Komponente (14a) der ersten Wärmetauscherbaugruppe angeordnet ist und/oder die dritte Komponente (15c) der zweiten Wärmetauscherbaugruppe (12b) zwischen der ersten (13b) und der zweiten Komponente (14b) der zweiten Wärmetauscherbaugruppe angeordnet ist.

7. Vorrichtung zum Austausch von Wärme gemäß wenigstens einem der vorstehenden Ansprüche,
**dadurch gekennzeichnet, dass**
die Komponenten der ersten Wärmetauscherbaugruppe und/oder die Komponenten der zweiten Wärmetauscherbaugruppe sich berühren.

8. Vorrichtung zum Austausch von Wärme gemäß wenigstens einem der vorstehenden Ansprüche,
**dadurch gekennzeichnet, dass**
sich wenigstens zwei Wärmetauscherbaugruppen berühren.

9. Vorrichtung zum Austausch von Wärme gemäß wenigstens einem der Ansprüche 5 oder 6,
**dadurch gekennzeichnet, dass**
die Berührung der Komponenten der Wärmetauscherbaugruppen und/oder die Berührung der Wärmetauscherbaugruppen den Austausch von thermischer und/oder elektrischer Energie begünstigt.

10. Vorrichtung zum Austausch von Wärme gemäß wenigstens einem der vorstehenden Ansprüche,
**dadurch gekennzeichnet, dass**
die physikalischen Eigenschaften der ersten Komponente (13b) der zweiten Wärmetauscherbaugruppe einen Transport von thermischer und/oder elektrischer Energie begünstigen.

11. Vorrichtung zum Austausch von Wärme gemäß wenigstens einem der vorstehenden Ansprüche,
**dadurch gekennzeichnet, dass**
die physikalischen Eigenschaften der ersten Komponente (13b) der zweiten Wärmetauscherbaugruppe einen Transport von thermischer und/oder elektrischer Energie hemmen.

12. Vorrichtung zum Austausch von Wärme gemäß wenigstens einem der vorstehenden Ansprüche,
**dadurch gekennzeichnet, dass**
die erste Komponente (13b) der zweiten Wärmetauscherbaugruppe so ausgeführt ist, dass der Strömungswiderstand den die erste Komponente (13b) der zweiten Wärmetauscherbaugruppe dem sie umströmenden Medium entgegensetzt, in einem vorbestimmten Verhältnis zum Strömungswiderstand, den die erste Komponente (13a) der ersten Wärmetauscherbaugruppe dem sie umströmenden Medium entgegensetzt, steht.

13. Vorrichtung zum Austausch von Wärme gemäß wenigstens einem der vorstehenden Ansprüche,
**dadurch gekennzeichnet, dass**
die Aufnahmeeinrichtung wenigstens einen ersten seitlichen Rahmenschenkel (16b) und wenigstens einen zweiten seitlichen Rahmenschenkel (16d) aufweist, wobei die ersten und/oder zweiten Wärmetauscherbaugruppen (12a, 12b) innerhalb der von dem ersten und zweiten Rahmenschenkel aufgespannten Fläche gehalten werden.

14. Vorrichtung zum Austausch von Wärme gemäß wenigstens einem der vorstehenden Ansprüche,
**dadurch gekennzeichnet, dass**
die Aufnahmeeinrichtung wenigstens einen oberen Rahmenschenkel (16a) und wenigstens einen unteren Rahmenschenkel (16c) aufweist, wobei die ersten und/oder zweiten Wärmetauscherbaugruppen (12a, 12b) innerhalb der von dem oberen und unteren Rahmenschenkel aufgespannten Fläche gehalten werden.

15. Vorrichtung zum Austausch von Wärme gemäß wenigstens einem der vorstehenden Ansprüche,
**dadurch gekennzeichnet, dass**
die ersten und/oder zweiten Wärmetauscherbaugruppen (12a, 12b) durch eine im Wesentlichen orthogonal zur Längsachse der Wärmetauscherbaugruppen wirkenden Kraft gehalten werden.

16. Vorrichtung zum Austausch von Wärme gemäß wenigstens einem der vorstehenden Ansprüche,
**dadurch gekennzeichnet, dass**
der erste seitliche Rahmenschenkel (16b) mit dem zweiten seitlichen Rahmenschenkel (16d) durch wenigstens einen der oberen (16a) und/oder wenigstens einen der unteren Rahmenschenkel (16c) verbunden ist, so dass erster und zweiter seitlicher Rahmenschenkel in einem definierbaren Abstand voneinander gehalten werden.

17. Vorrichtung zum Austausch von Wärme gemäß wenigstens einem, der vorstehenden Ansprüche,
**dadurch gekennzeichnet, dass**
wenigstens ein oberer (16a) und/oder unterer Rahmenschenkel (16c) als Endkappe ausgebildet ist.

18. Vorrichtung zum Austausch von Wärme gemäß wenigstens einem der vorstehenden Ansprüche,
**dadurch gekennzeichnet, dass**
wenigstens ein Rahmenschenkel, vorzugsweise der obere und der untere Rahmenschenkel aus einem elektrisch nichtleitenden Material, vorzugsweise Kunststoff, besteht.

19. Vorrichtung zum Austausch von Wärme gemäß wenigstens einem der vorstehenden Ansprüche,
**dadurch gekennzeichnet, dass**
wenigstens ein Rahmenschenkel der Rahmenanordnung einen Hohlprofilförmigen oder einen Formprofilförmigen Querschnitt aufweist, vorzugsweise einen U-förmigen, einen C-förmigen, einen I-förmigen, einen T-förmigen, einen L-förmigen Querschnitt aufweist.

20. Vorrichtung zum Austausch von Wärme gemäß wenigstens einem der vorstehenden Ansprüche,
**dadurch gekennzeichnet, dass**
wenigstens eine erste und/oder zweite Wämetauscherbaugruppe (12a, 12b) mit wenigstens einem Rahmenschenkel verbunden ist (19b), vorzugsweise durch wenigstens eine Steckverbindung, eine Schraubverbindung, eine Klebeverbindung, eine Schweißverbindung und/oder dergleichen verbunden ist.

21. Vorrichtung zum Austausch von Wärme gemäß wenigstens einem der vorstehenden Ansprüche,
**dadurch gekennzeichnet, dass**
die Aufnahmeeinrichtung (16) wenigstens ein Element aufweist, welches wenigstens einen Vorsprung aufweist, der wenigstens zwischen zwei Komponenten der ersten und/oder der zweiten Wärmetauscherbaugruppe eingreift.

22. Vorrichtung zum Austausch von Wärme gemäß wenigstens einem der vorstehenden Ansprüche,
**dadurch gekennzeichnet, dass**
das die Aufnahmeeinrichtung (16) wenigstens eine Ausnehmung und oder Durchführung aufweist, in die wenigstens eine Komponente der ersten und/oder zweiten Wärmetauscherbaugruppe eingreift.

23. Vorrichtung zum Austausch von Wärme gemäß wenigstens einem der vorstehenden Ansprüche,
**dadurch gekennzeichnet, dass**
wenigstens eine Komponente der Aufnahmeeinrichtung (16) mit einem Gehäuseteil einer Klimaanlage verbunden ist.

24. Vorrichtung zum Austausch von Wärme gemäß wenigstens einem der vorstehenden Ansprüche,
**dadurch gekennzeichnet, dass**
wenigstens eine Komponente der Aufnahmeeinrichtung (16) mit einem Gehäuseteil einer Klimaanlage einstückig ausgebildet ist.

25. Vorrichtung zum Austausch von Wärme gemäß wenigstens einem der vorstehenden Ansprüche,
**dadurch gekennzeichnet, dass**
wenigstens eine Komponente der Aufnahmeeinrichtung (16) einen elektrischen Anschluss aufweist.

26. Einrichtung zum Kühlen oder Heizen von Luft, insbesondere für ein Kraftfahrzeug, mit Luftströmungswegen, Luftströmungssteuerelementen und wenigstens einer Luftfördereinrichtung und einem Gehäuse, welches zur Aufnahme wenigstens einer Vorrichtung zum Austausch von Wärme, gemäß wenigstens einem der vorstehenden Ansprüche vorbereitet ist oder innerhalb dessen eine solche Vorrichtung zum Austausch von Wärme angeordnet ist.

## Claims

1. Heat exchange device, in particular for a motor vehicle, with
at least one first heat exchanger assembly (12a),
said first heat exchanger assembly (12a) having at least on first component (13a), which is connected (19a) to an electric power source (18a) and whose temperature changes in dependence on the electric current which is running through the component, and
said first heat exchanger assembly (12a) having at least one second component (14a) for the exchange of heat with a medium which flows around the heat exchanger assembly, and
at least one second heat exchanger assembly (12b),
said second heat exchanger assembly (12b) having at least on first component (13b), and
said second heat exchanger assembly (12b) having at least one second component (14b) for the exchange of heat with the medium which flows around the heat exchanger assembly, and
the dimensions of the second heat exchanger assembly (12b) corresponding at least partially to the dimensions of at least one of said first heat exchanger assemblies, and
the heat exchanger assemblies (12a, 12b) being arranged in a receiving unit (16), whereas
the first component (13b) of the second heat exchanger assembly (12b) is composed of a material which has a defined electric and thermal conductivity, and
the temperature of the first component (13b) of the second heat exchanger assembly (12b) is substantially not influenced by an electric current which runs through the component,
**characterised in that**
the first and the second heat exchanger assemblies (12a, 12b) can be combined modularly within the receiving unit (16) in varying configurations.

2. Heat exchange device according to claim 1,
**characterised in that**
the heat exchanger assemblies (12a, 12b) are combined such that the heat quantity which is exchangeable between the entire device and the medium flowing around the heat exchanger assemblies is predetermined.

3. Heat exchange device according to at least one of the previous claims,
**characterised in that**
the first component (13a) of the first heat exchanger assembly (12a) comprises at least one heating element with a positive temperature coefficient (PTC heating element).

4. Heat exchange device according to at least one of the previous claims,
**characterised in that**
the second component (14a) of the first heat exchanger assembly (12a) and/or the second component (14b) of the second heat exchanger assembly (12b) comprises cooling fins, preferably undulated cooling fins, preferably cooling fins made by a material which is electrically and thermally conductive.

5. Heat exchange device according to at least one of the previous claims,
**characterised in that**
the first heat exchanger assembly (12a) and/or the second heat exchanger assembly (12b) comprises at least one third component (15a, 15c), which conducts thermal and/or electrical energy.

6. Heat exchange device according to at least one of the previous claims,
**characterised in that**
the third component (15a) of the first heat exchanger assembly (12a) is arranged between the first (13a) and the second component (14a) of the first heat exchanger assembly and/or the third component (15c) of the second heat exchanger assembly (12b) is arranged between the first (13b) and the second component (14b) of the second heat exchanger assembly.

7. Heat exchange device according to at least one of the previous claims,
**characterised in that**
the components of the first heat exchanger assembly and/or the components of the second heat exchanger assembly contact each other.

8. Heat exchange device according to at least one of the previous claims,
**characterised in that**
at least two of the heat exchanger assemblies contact each other.

9. Heat exchange device according to at least one of claims 5 or 6,
**characterised in that**
the contact of the components of the heat exchanger assemblies and/or the contact of the heat exchanger assemblies promotes the exchange of thermal and/or electrical energy.

10. Heat exchange device according to at least one of the previous claims,
**characterised in that**
the physical properties of the first component (13b) of the second heat exchanger assembly promote a transport of thermal and/or electrical energy.

11. Heat exchange device according to at least one of the previous claims,
**characterised in that**
the physical properties of the first component (13b) of the second heat exchanger assembly inhibit a transport of thermal and/or electrical energy.

12. Heat exchange device according to at least one of the previous claims,
**characterised in that**
the first component (13b) of the second heat exchanger assembly is embodied such, that the flow resistance which the first component (13b) of the second heat exchanger assembly opposes to the medium which is flowing around it, has a predetermined ratio to the flow resistance which opposes the first component (13a) of the first heat exchanger assembly to the medium which is flowing around it.

13. Heat exchange device according to at least one of the previous claims,
**characterised in that**
the receiving unit comprises at least one first side frame member (16b) and at least one second side frame member (16d), whereas the first and/or second heat exchanger assemblies (12a, 12b) are held within the area which is spanned by the first and second side frame member.

14. Heat exchange device according to at least one of the previous claims,
**characterised in that**
the receiving unit comprises at least one upper frame member (16a) and at least one lower frame member (16c), whereas the first and/or second heat exchanger assemblies (12a, 12b) are held within the area which is spanned by the upper and lower frame member.

15. Heat exchange device according to at least one of the previous claims,
**characterised in that**
the first and/or second heat exchanger assemblies (12a, 12b) are held by a force which is acting substantially orthogonally to the longitudinal axis of the heat exchanger assemblies.

16. Heat exchange device according to at least one of the previous claims,
**characterised in that**
the first side frame member (16b) is connected with the second side frame member (16d) by at least one of the upper (16a) and/or at least one of the lower frame members (16c) such, that the first and second side frame members are held apart in a definable distance.

17. Heat exchange device according to at least one of the previous claims,
**characterised in that**
at least one upper (16a) and/or lower frame member (16c) is formed as an end cap.

18. Heat exchange device according to at least one of the previous claims,
**characterised in that**
at least one frame member, preferably the upper and the lower frame member are composed of an electrically non-conductive material, preferably plastics.

19. Heat exchange device according to at least one of the previous claims,
**characterised in that**
at least one frame member of the frame assembly has a hollow section shaped or a profile section shaped cross section, preferably has an U-shaped, a C-shaped, an I-shaped, a T-shaped, an L-shaped cross section.

20. Heat exchange device according to at least one of the previous claims,
**characterised in that**
at least one first and/or second heat exchanger assembly (12a, 12b) is connected (19b) with at least one frame member, preferably connected by at least one plug connexion, one bolted connexion, one adhesive joint, one welded connexion and/or the like.

21. Heat exchange device according to at least one of the previous claims,
**characterised in that**
the receiving unit (16) comprises at least one element, which has at least one projection, which engages at least between two components of the first and/or the second heat exchanger assembly.

22. Heat exchange device according to at least one of the previous claims,
**characterised in that**
the receiving unit (16) comprises at least one element, which has at least one recess and/or lead-through engaged by at least one component of the first and/or second heat exchanger assembly.

23. Heat exchange device according to at least one of the previous claims,
**characterised in that**
at least one component of the receiving unit (16) is connected to a housing part of an air conditioning system.

24. Heat exchange device according to at least one of the previous claims,
**characterised in that**
at least one component of the receiving unit (16) is formed integrally with a housing part of an air conditioning system.

25. Heat exchange device according to at least one of the previous claims,
**characterised in that**
at least one component of the receiving unit (16) has an electrical connector.

26. Device for the cooling or heating of air, in particular for a motor vehicle, with air flow paths, air flow control elements and at least one air conveyor and a housing which is prepared for holding at least one heat exchange device according to at least one of the previous claims or in which such a heat exchange device is arranged.

## Revendications

1. Dispositif d'échange de chaleur, en particulier pour un véhicule automobile, comportant au moins un premier groupe d'échange thermique (12a),
ledit premier groupe d'échange thermique (12a) comportant au moins un premier composant (13a), qui est relié (19a) à une source de courant électrique (18a) et dont la température varie en fonction d'un courant électrique circulant à travers l'un des composants, et
ledit premier groupe d'échange thermique (12a) comportant au moins un deuxième composant (14a) pour l'échange de chaleur avec un fluide circulant autour du groupe d'échange thermique, et
au moins un deuxième groupe d'échange thermique (12b),
ledit deuxième groupe d'échange thermique (12b) comportant au moins un premier composant (13b) et
ledit deuxième groupe d'échange thermique (12b) comportant au moins un deuxième composant (14b) pour l'échange de chaleur avec le fluide circulant autour du groupe d'échange thermique, et
les dimensions du deuxième groupe d'échange thermique (12b) correspondant au moins en partie aux dimensions d'au moins l'un desdits premiers groupes d'échange thermique, et
les groupes d'échange thermique (12a, 12b) étant agencés dans un dispositif de réception (16),
le premier composant (13b) du deuxième groupe d'échange thermique (12b) étant formé par un matériau avec une conductibilité électrique et thermique définie, et
la température du premier composant (13b) du deuxième groupe d'échange thermique (12b) n'étant sensiblement pas influencée par un courant électrique circulant à travers les composants,
**caractérisé en ce que**
le premier et le deuxième groupe d'échange thermique (12a, 12b) peuvent être combinés sous forme modulaire dans diverses configurations à l'intérieur du dispositif de réception (16).

2. Dispositif d'échange de chaleur selon la revendication 1,
**caractérisé en ce que**
les groupes d'échange thermique (12a, 12b) sont combinés de telle sorte que la quantité de chaleur, qui peut être échangée entre la totalité du dispositif et le fluide circulant autour des groupes d'échange thermique, est définie.

3. Dispositif d'échange de chaleur selon au moins l'une des revendications précédentes,
**caractérisé en ce que**
le premier composant (13a) du premier groupe d'échange thermique (12a) comporte au moins un élément de chauffage avec un coefficient de température positif (élément de chauffage CTP).

4. Dispositif d'échange de chaleur selon au moins l'une des revendications précédentes,
**caractérisé en ce que**
le deuxième composant (14a) du premier groupe d'échange thermique (12a) et/ou le deuxième composant (14b) du deuxième groupe d'échange thermique (12b) comporte des nervures de refroidissement, de préférence des nervures de refroidissement ondulées, de préférence des nervures ondulées dans un matériau thermoconducteur électrique et/ou thermique.

5. Dispositif d'échange de chaleur selon au moins l'une des revendications précédentes,
**caractérisé en ce que**
le premier groupe d'échange thermique (12a) et/ou le deuxième groupe d'échange thermique (12b) comporte au moins un troisième composant (15a, 15c), qui conduit l'énergie thermique et/ou électrique.

6. Dispositif d'échange de chaleur selon au moins l'une des revendications précédentes,
**caractérisé en ce que**
le troisième composant (15a) du premier groupe d'échange thermique (12a) est agencé entre le premier composant (13a) et le deuxième composant (14a) du premier groupe d'échange thermique (12a) et/ou le troisième composant (15c) du deuxième groupe d'échange thermique (12b) est agencé entre le premier composant (13b) et le deuxième composant (14b) du deuxième groupe d'échange thermique (12b).

7. Dispositif d'échange de chaleur selon au moins l'une des revendications précédentes,
**caractérisé en ce que**
les composants du premier groupe d'échange thermique et/ou les composants du deuxième groupe d'échange thermique sont en contact les uns contre les autres.

8. Dispositif d'échange de chaleur selon au moins l'une des revendications précédentes,
**caractérisé en ce que**
au moins deux groupes d'échange thermique sont en contact l'un contre l'autre.

9. Dispositif d'échange de chaleur selon la revendication 5 ou 6,
**caractérisé en ce que**
le contact entre les composants des groupes d'échange thermique et/ou le contact entre les groupes d'échange thermique favorisent l'échange d'énergie thermique et/ou électrique.

10. Dispositif d'échange de chaleur selon au moins l'une des revendications précédentes,
**caractérisé en ce que**
les propriétés physiques du premier composant (13b) du deuxième groupe d'échange thermique (12b) favorisent un transport de l'énergie thermique et/ou électrique.

11. Dispositif d'échange de chaleur selon au moins l'une des revendications précédentes,
**caractérisé en ce que**
les propriétés physiques du premier composant (13b) du deuxième groupe d'échange thermique (12b) inhibent un transport de l'énergie thermique et/ou électrique.

12. Dispositif d'échange de chaleur selon au moins l'une des revendications précédentes,
**caractérisé en ce que**
le premier composant (13b) du deuxième groupe d'échange thermique (12b) est conçu de telle sorte que la résistance à l'écoulement, que le premier composant (13b) du deuxième groupe d'échange thermique (12b) oppose au fluide circulant autour de ce dernier, se situe dans un rapport prédéterminé avec la résistance à l'écoulement que le premier composant (13a) du premier groupe d'échange thermique (12a) oppose au fluide circulant autour de ce dernier.

13. Dispositif d'échange de chaleur selon au moins l'une des revendications précédentes,
**caractérisé en ce que**
le dispositif de réception (16) comporte au moins une première barre d'encadrement latérale (16b) et au moins une deuxième barre d'encadrement latérale (16d), le premier et/ou le deuxième groupe d'échange thermique (12a, 12b) étant maintenus à l'intérieur de la surface déployée par la première et la deuxième barre d'encadrement.

14. Dispositif d'échange de chaleur selon au moins l'une des revendications précédentes,
**caractérisé en ce que**
le dispositif de réception (16) comporte au moins une barre d'encadrement (16a) supérieure et au moins une barre d'encadrement (16c) inférieure, le premier et/ou le deuxième groupe d'échange thermique (12a, 12b) étant maintenus à l'intérieur de la surface déployée par la barre d'encadrement supérieure et la barre d'encadrement inférieure.

15. Dispositif d'échange de chaleur selon au moins l'une des revendications précédentes,
**caractérisé en ce que**
le premier et/ou le deuxième groupe d'échange thermique (12a, 12b) sont maintenus par une force agissant sensiblement orthogonalement à l'axe longitudinal des groupes d'échange thermique.

16. Dispositif d'échange de chaleur selon au moins l'une des revendications précédentes,
**caractérisé en ce que**
la première barre d'encadrement latérale (16b) est reliée à la deuxième barre d'encadrement latérale (16d) par au moins l'une des barres d'encadrement supérieures (16a) et/ou au moins l'une des barres d'encadrement inférieures (16c), de telle sorte que la première et la deuxième barre d'encadrement latérale sont maintenues à une distance définie l'une de l'autre.

17. Dispositif d'échange de chaleur selon au moins l'une des revendications précédentes,
**caractérisé en ce que**
au moins une barre d'encadrement supérieure (16a) et/ou inférieure (16c) est réalisée sous forme de cache d'extrémité.

18. Dispositif d'échange de chaleur selon au moins l'une des revendications précédentes,
**caractérisé en ce que**
au moins une barre d'encadrement, de préférence la barre d'encadrement supérieure et la barre d'encadrement inférieure, est réalisée dans un matériau non conducteur électrique, de préférence en matière plastique.

19. Dispositif d'échange de chaleur selon au moins l'une des revendications précédentes,
**caractérisé en ce que**
au moins une barre d'encadrement du système d'encadrement a une section en forme de profilé creux ou une section en forme de profilé façonné, de préférence une section en U, une section en C, une section en I, une section en T, une section en L.

20. Dispositif d'échange de chaleur selon au moins l'une des revendications précédentes,
**caractérisé en ce que**
au moins un premier et/ou un deuxième groupe d'échange thermique (12a, 12b) est assemblé (19b) à au moins une barre d'encadrement, de préférence par un assemblage enfiché, un assemblage vissé, un assemblage collé, un assemblage soudé et/ou un assemblage similaire.

21. Dispositif d'échange de chaleur selon au moins l'une des revendications précédentes,
**caractérisé en ce que**
le dispositif de réception (16) comporte au moins un élément qui est muni d'au moins une saillie, qui s'engage au moins entre deux composants du premier et/ou du deuxième groupe d'échange thermique.

22. Dispositif d'échange de chaleur selon au moins l'une des revendications précédentes,
**caractérisé en ce que**
le dispositif de réception (16) comporte au moins un évidement et/ou un passage, dans lequel s'engage au moins un composant du premier et/ou du deuxième groupe d'échange thermique.

23. Dispositif d'échange de chaleur selon au moins l'une des revendications précédentes,
**caractérisé en ce que**
au moins un composant du dispositif de réception (16) est assemblé à une partie du boîtier d'une installation de climatisation.

24. Dispositif d'échange de chaleur selon au moins l'une des revendications précédentes,
**caractérisé en ce que**
au moins un composant du dispositif de réception (16) est réalisé d'un seul tenant avec une partie du boîtier d'une installation de climatisation.

25. Dispositif d'échange de chaleur selon au moins l'une des revendications précédentes,
**caractérisé en ce que**
au moins un composant du dispositif de réception (16) comporte un raccord électrique.

26. Installation de refroidissement ou de chauffage de l'air, en particulier pour un véhicule automobile, comportant des trajectoires de circulation d'air, des éléments de commande de la circulation d'air et au moins un dispositif de transport de l'air et un boîtier, qui est préparé pour recevoir au moins un dispositif d'échange de chaleur selon au moins l'une des revendications précédentes ou est agencé à l'intérieur d'un tel dispositif d'échange de chaleur.
